(19) Europäisches Patentamt
European Patent Office
Office européen des brevets

(11) Veröffentlichungsnummer: **0 196 463**
**B1**

(12) **EUROPÄISCHE PATENTSCHRIFT**

(45) Veröffentlichungstag der Patentschrift: **15.11.89**

(51) Int. Cl.⁴: **A01N 25/04**

(21) Anmeldenummer: **86102600.3**

(22) Anmeldetag: **28.02.86**

(54) **Makroemulsionen.**

(30) Priorität: **12.03.85 DE 3508642**
**11.04.85 DE 3512916**

(43) Veröffentlichungstag der Anmeldung:
**08.10.86 Patentblatt 86/41**

(45) Bekanntmachung des Hinweises auf die Patenterteilung:
**15.11.89 Patentblatt 89/46**

(84) Benannte Vertragsstaaten:
**AT BE CH DE FR GB IT LI NL SE**

(56) Entgegenhaltungen:
**EP-A- 0 083 437**
**EP-A- 0 111 580**
**DE-A- 2 805 251**
**DE-A- 2 936 265**
**FR-A- 2 452 249**
**US-A- 4 071 617**

**Die Akte enthält technische Angaben, die nach dem Eingang der Anmeldung eingereicht wurden und die nicht in dieser Patentschrift enthalten sind.**

(73) Patentinhaber: **BAYER AG,**
**D-5090 Leverkusen 1 Bayerwerk(DE)**

(72) Erfinder: **Wirth, Wolfgang, Dr., Hanftalstrasse 34,**
**D-5202 Hennef 1(DE)**
Erfinder: **Niessen, Heinz Josef, Dr., Pannenberg 73,**
**D-5060 Bergisch-Gladbach 2(DE)**
Erfinder: **Goossens, John W.S., Dl., Hebbelstrasse 5,**
**D-5090 Leverkusen 1(DE)**
Erfinder: **Schulze, Hans, Dr., Wolfskaul 4,**
**D-5000 Köln 80(DE)**

**EP 0 196 463 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Makroemulsionen, die Wirkstoffe aus der Klasse der Phosphorsäureester enthalten, ein Verfahren zur Herstellung der Makroemulsionen und deren Verwendung zur Bekämpfung von Schädlingen.

Es sind bereits zahlreiche wäßrige Emulsionen von agrochemischen Wirkstoffen bekannt geworden. Derartige Zubereitungen lassen sich z.B. dadurch herstellen, daß man die in Wasser meist unlöslichen Wirkstoffe in einer solchen Menge an organischen Solventien löst und mit einer solchen Menge an Emulgatoren versetzt, daß sich beim Verdünnen dieser Formulierungen mit Wasser auf die Anwendungskonzentrationen ausreichend stabile Emulsionen bilden. Durch die enthaltenen Lösungsmittel ergeben sich für die Konzentrate jedoch häufig Nachteile in bezug auf die Brennbarkeit, die toxikologischen Eigenschaften, die Pflanzenverträglichkeit und den Geruch.

Bei agrochemischen Wirkstoffen, die bei Einstellung eines bestimmten pH-Wertes durch Wasser nicht hydrolysiert werden, oder die von sich aus gegenüber einer Hydrolyse nicht empfindlich sind, lassen sich die organischen Lösungsmittel oder auch Gemische organischer Solventien bei der Herstellung von Pflanzenschutzmittel-Formulierungen ganz oder zumindest teilweise durch Wasser ersetzen. Bei Zugabe geeigneter Emulgatoren erhält man dabei Mikroemulsionen, also Öl-in-Wasser-Emulsionen, in denen die Ölphase in Form von Tröpfchen mit einem Durchmesser von unter 0,1 μ in der wäßrigen Phase verteilt ist (vgl. EP-OS 0 062 181, EP-OS 0 107 009 und EP-OS 0 107 023). Nachteilig an diesen Mikroemulsionen ist, daß die enthaltenen Wirkstoffe im allgemeinen sehr schnell freigesetzt werden, wodurch die Toxizität der Präparate nicht günstiger, sondern oft sogar ungünstiger ist als bei den Konzentraten, in denen größere Mengen an organischen Lösungsmitteln enthalten sind. Ferner sind derartige Mikroemulsionskonzentrate oft nur in einem engen Temperaturbereich gegen Phasentrennung stabil.

Weiterhin sind auch Makroemulsionen von agrochemischen Wirkstoffen bekannt, also Öl-in-Wasser-Emulsionen, in denen die Ölphase in Form von Tröpfchen mit einem mittleren Durchmesser von 0,5 μ und größer in der wäßrigen Phase verteilt ist. In den bekannte Makroemulsionen sind zur Stabilisierung Zusätze von Verdickungsmitteln vorhanden (vgl. US-PS 4 303 640). Wegen der enthaltenen Verdickungsmittel ist die Viskosität dieser Makroemulsionen allerdings so hoch, daß eine volumetrische Dosierung der Präparate erschwert wird, und daß in den entleerten Behältern erhebliche Restmengen an Pflanzenschutzmitteln verbleiben können.

Schließlich sind auch Öl-in-Wasser-Emulsionen von bestimmten agrochemischen Wirkstoffen bekannt, die Polyvinylalkohol als Stabilisierungsmittel neben herkömmlichen Emulgatoren enthalten (vgl. EP-OS 0 111 580). Die toxikologischen Eigenschaften derartiger Emulsionen, deren mittlere Tröpfchengröße < 1μ ist, sind jedoch ungünstiger als diejenigen von entsprechenden Emulsionen, in denen nur Polyvinylalkohol als Stabilisierungsmittel vorhanden ist. Insbesondere tritt in manchen Fällen beim Ausbringen der auf die Anwendungskonzentration verdünnten Spritzbrühen eine unerwünschte haut- und schleimhautreizende Wirkung auf.

Als weiterer Stand der Technik sei aufgeführt:

EPA-A-0 083 437:

Diese Anmeldung enthält als zwingenden Bestandteil Polyvinylalkohol (siehe dortige Komponente (b)), weiterhin wird ein Salzzusatz (z.B. $CaCl_2$, $Ca(NO_3)_2$, $MgCl_2$, $Mg(NO_3)_2$, KBr, KI, $NaNO_3$ und Gemischen daraus) obligatorisch.

US-A-4 071 617:

Dies sind Zubereitungen mit 10 bis 80 Gewichtsprozent Wasser, weiterhin ist ein Vinylalkohol/Vinylacetat-Poylmer zwingend erforderlich.

Diese US-Patentschrift betrifft weiterhin Suspensionen (feste Teilchen in einer Flüssigkeit) im Gegensatz zu den Emulsionen (Flüssigkeitströpfchen in einer Flüssigkeit) der anmeldungsgemäßen Erfindung.

DE-OS 2 936 265:

Es handelt sich wiederum ausschließlich um Suspensionen, weiterhin sind die dort eingesetzten Wirkstoffe auf das Gebiet der Carbamate beschränkt und der Bestandteil Polyvinylalkohol ist obligatorisch. Zusätzlich sind Äthylenglykol und flüssiges Paraffin in Wasser suspendiert.

US-A-3 658 959:

bezieht sich ebenfalls auf Carbamat-Präparationen, weiterhin werden zum Unterschied vom Gegenstand der vorliegenden Erfindungen Ester polybasischer Säuren (z.B. von Phosphorsäure oder Diglykolsäure) von Oxyalkylenpolyolen eingesetzt.

EP-P 107 009:

Diese Zubereitungen besitzen ebenfalls eine andere Zusammensetzung als die erfindungsgemäßen.

Bei EP-0 107 009 ist das Vorhandensein eines Alkylarylsulfonsäure-Salzes zwingend erforderlich. Weiterhin liegen dort im Gegensatz zu den erfindungsgemäßen Makroemulsionen, Mikroemulsionen mit einer Teilchengröße < 0,1 μ vor.

Es wurden nun neue Makroemulsionen gefunden, die dadurch gekennzeichnet sind, daß sie

– 0,001 bis 60 Gewichtsprozent mindestens eines Wirkstoffes aus der Klasse der Phosphorsäureester

– 0 bis 50 Gewichtsprozent an aromatischem Verdünnungsmittel,

– 0,001 bis 20 Gewichtsprozent an Nonylphenol-Propylenoxid-Ethylenoxid-Addukt der Formel

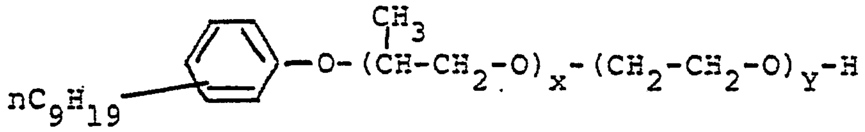 (I)

in welcher
X für ganze Zahlen von 10 bis 50 steht
und
Y für ganze Zahlen von 15 bis 65 steht,
und/oder

– 0,001 bis 20 Gewichtsprozent an Ethylenoxid-Propylenoxid-Ethylenoxid-Blockcopolymeren mit einem mittleren Molekulargewicht zwischen 2000 und 8000 und HLB-Werten zwischen 8 und 30,

– sowie Wasser und Glycerin
enthalten und

– in denen die Ölphase in Form von Tröpfchen mit einem mittleren Teilchendurchmesser von 0,1 bis 3,0 μ in der wäßrigen Phase verteilt ist.

Weiterhin wurde gefunden, daß sich die erfindungsgemäßen Makroemulsionen dadurch herstellen lassen, daß man

– mindestens einen Wirkstoff aus der Klasse der Phosphorsäureester, gegebenenfalls in Gegenwart eines aromatischen Verdünnungsmittels bei Temperaturen zwischen 10°C und 30°C unter Rühren.

– mit einer wäßrigen Lösung, die zwischen 1 und 30 Gewichtsprozent an Nonylphenol-Propylenoxid-Ethylenoxid-Addukt der Formel

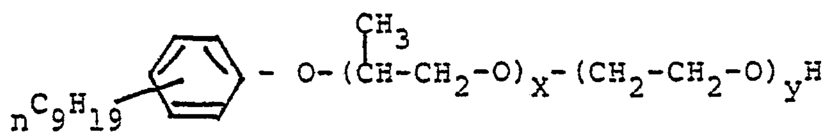 (I)

in welcher
X für ganze Zahlen von 10 bis 50 steht
und
Y für ganze Zahlen von 15 bis 65 steht,
enthält,
und/oder

– mit einer wäßrigen Lösung, die zwischen 1 und 30 Gewichtsprozent an Ethylenoxid-Propylenoxid-Ethylenoxid-Blockcopolymeren mit einem mittleren Molekulargewicht zwischen 2000 und 8000 HLB-Werten zwischen 8 und 30 enthält, versetzt,

– dann die resultierende Emulsion, gegebenenfalls nach vorherigem Versetzen mit Zusatzstoffen, bei Temperaturen zwischen 10°C und 70°C mit einer geeigneten Vorrichtung homogenisiert und

– anschließend mit Glycerin versetzt und mit Wasser auf die gewünschte Konzentration auffüllt.

Schließlich wurde gefunden, daß die erfindungsgemäßen Makroemulsionen sehr gut zur Bekämpfung von Schädlingen eingesetzt werden können.

Es ist als äußerst überraschend zu bezeichnen, daß die erfindungsgemäßen Makroemulsionen weniger haut- und schleimhautreizend sind als entsprechende vorbekannte Emulsionen, die organische Solventien und herkömmliche Emulgatoren enthalten. Unerwartet ist auch, daß die erfindungsgemäßen Formulierungen über einen relativ großen Temperaturbereich hinweg in bezug auf Wirkstoffabbau, Wirkstoffkristallisation und Entmischung stabil sind.

Die erfindungsgemäßen Makroemulsionen zeichnen sich auch durch eine Reihe von Vorteilen aus. So lassen sie sich in einfacher Weise unter Verwendung von gängigen Hilfsmitteln herstellen. Die Zugabe von Verdickungsmitteln und Emulgatoren ist nicht erforderlich. Ferner besitzen die erfindungsgemäßen Makroemulsionen eine niedrige Viskosität, so daß eine volumetrische Dosierung ohne Schwierigkeiten vorgenommen werden kann. Hervorzuheben sind darüberhinaus auch die günstigen toxikologischen Eigenschaften, die leichte Dispergierbarkeit in Wasser und die sowohl bei niedrigen als auch bei hohen Temperaturen vorhandene gute physikalische Stabilität der erfindungsgemäßen Emulsionen.

Als aktive Komponenten sind in den erfindungsgemäßen Makroemulsionen einer oder mehrere insektizid, akarizid und/oder nematizid wirksame Stoffe aus der Klasse der Phosphorsäureester enthalten. Als Wirkstoffe kommen dabei sowohl solche Substanzen in Frage, die bei Raumtemperatur flüssig sind, als auch solche, die bei Raumtemperatur fest sind. Als Beispiele für derartige Wirkstoffe seien im einzelnen genannt:

O-Ethyl-O-(3-methyl-4-methylthio-phenyl)-isopropylamido-phosphat
O-Ethyl-S,S-di-phenyl-dithiophosphat

O,O-Dimethyl-O-(4-methylthio-3-methylphenyl)-thionophosphorsäureester
O-Ethyl-S-propyl-O-(2,4-dichlor-phenyl)-thionophosphorsäureester
O,O-Diethyl-O-(4-nitro-phenyl)-thionophosphorsäureester
O,O-Dimethyl-O-(4-nitro-phenyl)-thionophosphorsäureester
O-Ethyl-O-(4-methylthio-phenyl)-S-propyl-dithiophosphat
(O,O-Diethyl-thionophosphoryl)-α-oximino-phenylessigsäure-nitril
O,O-Diethyl-O-(3-chlor-4-methyl-7-cumarinyl)-thiophosphat
S-[1,2-Bis-(ethoxcarbonyl).-ethyl]-O,O-dimethyl-dithiophosphorsäureester
O-Ethyl-O-(2-isopropyloxycarbonyl-phenyl)-N-isopropylthiono-phosphorsäureesteramid

In den erfindungsgemäßen Makroemulsionen können alle üblichen aromatischen Solventien oder Solventien-Gemische vorhanden sein, die zwischen 100°C und 290°C sieden. Bevorzugt infrage kommen Toluol, Ethylbenzol, Chlorbenzol, Xylole, alkylierte Benzole mit durchschnittlich 9 Kohlenstoffatomen, wie die unter der Bezeichnung Solvesso® bekannten Lösungsmittel-Typen, ferner gegebenenfalls durch Alkyl mit 1 bis 3 Kohlenstoffatomen substituiertes Naphthalin.

Die erfindungsgemäßen Makroemulsionen enthalten entweder Nonylphenol-Propylenoxid-Ethylenoxid-Addukte der Formel (I) oder Ethylenoxid-Propylenoxid-Ethylenoxid-Blockcopolymere des oben angegebenen Typs oder aber Gemische aus einer oder mehreren der zuvor genannten Komponenten.

Als Nonylphenol-Propylenoxid-Ethylenoxid-Addukte kommen vorzugsweise solche Verbindungen der Formel (I) in Betracht, in denen X für ganze Zahlen von 20 bis 45 und Y für ganze Zahlen von 20 bis 60 steht.

Als Ethylenoxid-Propylenoxid-Ethylenoxid-Blockcopolymere kommen vorzugsweise solche Verbindungen dieses Typs infrage, die ein mittleres Molekulargewicht zwischen 2500 und 7000 besitzen und HLB-Werte (= Hydrophilic-Lipophilic-Balance) zwischen 9 und 27 aufweisen. Der HLB-Wert stellt dabei ein Maß für die Hydrophilie bzw. Lipophilie der eingesetzten Stoffe dar.

In den erfindungsgemäßen Makroemulsionen ist Glycerin als Zusatzstoff enthalten.

Die erfindungsgemäßen Makroemulsionen enthalten Wasser als kontinuierliche Phase. Handelt es sich um Konzentrate, so ist die Menge an Wasser relativ gering. Im Falle stark verdünnter Emulsionen sind erhebliche Mengen an Wasser enthalten.

In den erfindungsgemäßen Makroemulsionen ist die Ölphase (= disperse Phase) in Form von Tröpfchen in der wäßrigen Phase verteilt. Die Größe der Öltröpfchen kann dabei innerhalb eines bestimmten Bereiches variiert werden. Im allgemeinen liegt der mittlere Teilchendurchmesser zwischen 0,1 und 3,0 μ, vorzugsweise zwischen 0,2 und 2,5 μ.

In den erfindungsgemäßen Makroemulsionen können die prozentualen Anteile der enthaltenen Komponenten innerhalb größerer Bereiche variiert werden. Der Anteil an Wirkstoffen aus der Klasse der Phosphorsäureester liegt im allgemeinen zwischen 0,001 und 60 Gewichtsprozent, vorzugsweise zwischen 0,01 und 50 Gewichtsprozent. Der Anteil an aromatischem Verdünnungsmittel beträgt im allgemeinen zwischen 0 und 50 Gewichtsprozent, vorzugsweise zwischen 0 und 40 Gewichtsprozent. Wenn Nonylphenol-Propylenoxid-Ethylenoxid-Addukt der Formel (I) enthalten ist, dann beträgt der Anteil an dieser Komponente im allgemeinen zwischen 0,001 und 20 Gewichtsprozent, vorzugsweise zwischen 0,01 und 10 Gewichtsprozent. Sofern Ethylenoxid-Propylenoxid-Ethylenoxid-Blockcopolymer enthalten ist, liegt der Anteil an dieser Komponente im allgemeinen zwischen 0,001 und 20 Gewichtsprozent, vorzugsweise zwischen 0,01 und 10 Gewichtsprozent.

Der Zusatzstoff Glycerin ist vorzugsweise in Anteilen zwischen 0,1 und 20 Gewichtsprozent, insbesondere zwischen 0,2 und 15 Gewichtsprozent enthalten.

Der prozentuale Anzeil an Wasser in den erfindungsgemäßen Makroemulsionen errechnet sich jeweils als Differenz aus 100 Gewichtsprozent und der Summe der prozentualen Anteile der übrigen Komponenten.

Bei der Herstellung der erfindungsgemäßen Makroemulsionen können vorzugsweise alle diejenigen Komponenten verwendet werden, die bereits im Zusammenhang mit der Beschreibung der erfindungsgemäßen Makroemulsionen vorzugsweise oder beispielhaft genannt wurden.

Verwendet man bei dem erfindungsgemäßen Verfahren einen Wirkstoff, der bei Raumtemperatur im flüssigen Zustand vorliegt, so wird dieser Wirkstoff im allgemeinen in Substanz eingesetzt. Es ist jedoch auch möglich, eine Lösung des betreffenden Wirkstoffes in einem aromatischen Verdünnungsmittel zu verwenden.

Verwendet man bei dem erfindungsgemäßen Verfahren einen Wirkstoff, der bei Raumtemperatur im festen Zustand vorliegt, so wird eine Lösung des betreffenden Stoffes in einem aromatischen Verdünnungsmittel eingesetzt.

Wird bei der Durchführung des erfindungsgemäßen Verfahrens Nonylphenol-Propylenoxid-Ethylenoxid-Addukt der Formel (I) eingesetzt, so verwendet man diese Komponente in Form von wäßrigen Lösungen. Die Konzentrationen dieser Lösungen können innerhalb eines bestimmten Bereiches variiert werden. Im allgemeinen verwendet man wäßrige Lösungen, die zwischen 1 und 30 Gewichtsprozent, vorzugsweise zwischen 5 und 25 Gewichtsprozent an Nonylphenol-Propylenoxid-Ethylenoxid-Addukt der Formel (I) enthalten.

Wird bei der Durchführung des erfindungsgemäßen Verfahrens Ethylenoxid-Propylenoxid-Ethylenoxid-Blockcopolymer eingesetzt, so verwendet man diese Komponente in Form von wäßrigen Lösungen. Die Konzentrationen dieser Lösungen können innerhalb eines bestimmten Bereiches variiert werden. Im allgemeinen verwendet man wäßrige Lösungen, die zwischen 1 und 30 Gewichtsprozent, vorzugsweise zwischen 5 und 25 Gewichtsprozent, an Blockcopolymeren enthalten.

In der ersten Stufe des erfindungsgemäßen Verfahrens wird eine Voremulsion hergestellt, die dann in der zweiten Stufe des Verfahrens homogenisiert wird.

Sowohl in der ersten als auch in der zweiten Stufe des erfindungsgemäßen Verfahrens können die Reaktionstemperaturen innerhalb eines bestimmten Bereiches variiert werden. Bei der Durchführung der ersten Stufe arbeitet man im allgemeinen bei Temperaturen zwischen 10°C und 30°C, vorzugsweise zwischen 15°C und 25°C. Bei der Durchführung der zweiten Stufe arbeitet man im allgemeinen bei Temperaturen zwischen 10°C und 70°C, vorzugsweise zwischen 15°C und 65°C.

Die Homogenisierung erfolgt in der zweiten Stufe des erfindungsgemäßen Verfahrens vorzugsweise mit Hochdruckhomogenisatoren oder mehrstufigen Strahldispergatoren, in denen der Druckabfall pro Strahldispergierdüse zwischen 10 und 50 bar liegt. Derartige Strahldispergatoren sind bereits bekannt (vgl. EP-OS 0 101 007).

Bei der Durchführung des erfindungsgemäßen Verfahrens geht man im allgemeinen so vor, daß man

– in der ersten Stufe entweder einen oder mehrere flüssige Wirkstoffe oder eine Lösung von festen und/oder flüssigen Wirkstoffen in einem aromatischen Verdünnungsmittel vorlegt und bei Temperaturen zwischen 10°C und 30°C unter Rühren mit einer wäßrigen Lösung eines Nonylphenol-Propylenoxid-Ethylenoxid-Adduktes der Formel (I),

und/oder einer wäßrigen Lösung eines Ethylenoxid-Propylenoxid-Ethylenoxid-Blockcopolymeren sowie gegebenenfalls mit Zusatzstoffen versetzt,

– dann in einer zweiten Stufe die resultierenden Voremulsion bei Temperaturen zwischen 10°C und 70°C mit Hilfe einer geeigneten Vorrichtung homogenisiert und

– anschließend mit Glycerin versetzt und mit Wasser auf die gewünschte Konzentration auffüllt.

Die Mengen der Komponenten werden dabei so gewählt, daß Makroemulsionen entstehen, in denen die Konzentrationen der einzelnen Bestandteile in den oben angegebenen Bereichen liegen.

Die erfindungsgemäßen Makroemulsionen weisen sehr gute insektizide, akarizide und/oder nematizide Eigenschaften auf. Sie können deshalb zur Bekämpfung der entsprechenden tierischen Schädlinge, wie Insekten, Spinnentiere und/oder Nematoden, in der Landwirtschaft, im Gartenbau, im Haushalts- und Hygienebereich sowie im veterinärmedizinischen Bereich eingesetzt werden.

Die erfindungsgemäßen Makroemulsionen können entweder in der zubereiteten Form oder nach vorheriger Verdünnung appliziert werden. Die Aufwandmenge richtet sich dabei nach der Konzentration der Wirkstoffe in der Formulierung und nach der jeweiligen Indikation.

Die Anwendung der erfindungsgemäßen Makroemulsionen erfolgt, gegebenenfalls nach vorheriger Verdünnung, nach den üblichen Methoden, also zum Beispiel durch Spritzen, Sprühen oder Gießen.

Die Herstellung der erfindungsgemäßen Makroemulsionen geht aus den folgenden Beispielen hervor.

## Herstellungsbeispiele

### Beispiel 1

Eine Lösung von 6 Gewichtsteilen eines Ethylenoxid-Propylenoxid-Ethylenoxid-Blockcopolymerisates mit einem mittleren Molekulargewicht von 6500 und einem HLB-Wert von 15,0 in 59 Gewichtsteilen entmineralisiertem Wasser wird unter Rühren bei Raumtemperatur zu 25 Gewichtsteilen O,O-Dimethyl-O-(3-methyl-4-methylthio-phenyl)-thiophosphat hinzugegeben. Die resultierende Voremulsion wird bei 20°C mit einem zweistufigen Strahldispergator, bei dem der Druckabfall pro Strahldispergierdüse 40 bar beträgt, homogenisiert. Anschließend fügt man 10 Gewichtsteile Glycerin hinzu und rührt weitere 5 Minuten. Man erhält auf diese Weise eine Makroemulsion, in der die Ölphase in Form von Tröpfchen mit einem mittleren Teilchendurchmesser von 1 μ in der wäßrigen Phase verteilt ist.

Die erhaltene Makroemulsion blieb auch nach achtwöchiger Lagerung im Temperaturwechselschrank bei Temperaturen zwischen –15°C und +30°C sowie bei +50°C stabil.

### Beispiel 2

Zu einer Lösung von 25 Gewichtsteilen O-Ethyl-O-(3-methyl-4-methylthio-phenyl)-isopropylamidophosphat in 20 Gewichtsteilen eines unter der Bezeichnung Solvesso 100® bekannten aromatischen Lösungsmittels wird bei Raumtemperatur unter Rühren eine Lösung von 6 Gewichtsteilen eines Ethylenoxid-Propylenoxid-Ethylenoxid-Blockcopolymerisates mit einem mittleren Molekulargewicht von 3000 und einem HLB-Wert von 15,0 in 49 Gewichtsteilen entmineralisiertem Wasser gegeben. Die resultierende Voremulsion wird auf 50°C aufgeheizt und mit einem zweistufigen Strahldispergator, bei dem der Druckabfall pro Strahldispergierdüse 40 bar beträgt, homogenisiert. Anschließend fügt man 10 Gewichtsteile Glycerin hinzu und rührt weitere 5 Minuten. Man erhält auf diese Weise eine Makroemulsion,

in der die Ölphase in Form von Tröpfchen mit einem mittleren Durchmesser von 1 μ in der wäßrigen Phase verteilt ist.

Die so erhaltene Makroemulsion blieb auch nach achtwöchiger Lagerung im Temperaturwechselschrank bei Temperaturen zwischen –15°C und +30°C sowie bei +50°C stabil.

Beispiel 3

Eine Lösung von 2,4 Gewichtsteilen eines Nonylphenol-Propylenoxid-Ethylenoxid-Adduktes der angenäherten Formel

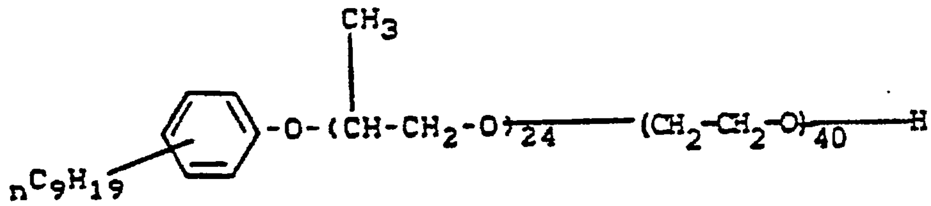

in 45,6 Gewichtsteilen entmineralisiertem Wasser wird unter Rühren bei Raumtemperatur zu 25 Gewichtsteilen O-Ethyl-O-(2,4-dichlorphenyl-S-n-propyl-dithiophosphat hinzugegeben. Die resultierende Voremulsion wird auf 50°C aufgeheizt und mit einem zweistufigen Strahldispergator, bei dem der Druckabfall pro Strahldispergierdüse 40 bar beträgt, homogenisiert. Anschließend fügt man 10 Gewichtsteile Glycerin und 19,4 Gewichtsteile entmineralisiertes Wasser hinzu und rührt weitere 5 Minuten. Man erhält auf diese Weise eine Makroemulsion, in der die Ölphase in Form von Tröpfchen mit einem mittleren Durchmesser von 1 μ in der wäßrigen Phase verteilt ist.

Die erhaltene Makroemulsion blieb auch nach achtwöchiger Lagerung im Temperaturwechselschrank bei Temperaturen zwischen –15°C und +30°C sowie bei +50°C stabil.

**Patentansprüche**

1. Makroemulsionen, dadurch gekennzeichnet, daß sie
– 0,001 bis 60 Gewichtsprozent mindestens eines Wirkstoffes aus der Klasse der Phosphorsäureester
– 0 bis 50 Gewichtsprozent an aromatischem Verdünnungsmittel,
– 0,001 bis 20 Gewichtsprozent an Nonylphenol-Propylenoxid-Ethylenoxid-Addukt der Formel

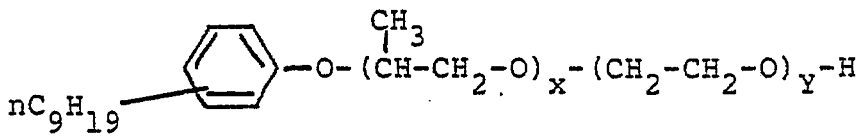
(I)

in welcher
X für ganze Zahlen von 10 bis 50 steht und
Y für ganze Zahlen von 15 bis 65 steht,
und/oder
– 0,001 bis 20 Gewichtsprozent an Ethylenoxid-Propylenoxid-Ethylenoxid-Blockcopolymeren mit einem mittleren Molekulargewicht zwischen 2000 und 8000 und HLB-Werten zwischen 8 und 30,
– sowie Wasser und Glycerin
enthalten und
– in denen die Ölphase in Form von Tröpfchen mit einem mittleren Teilchendurchmesser von 0,1 bis 3,0 μ in der wäßrigen Phase verteilt ist.

2. Makroemulsionen gemäß Anspruch 1, dadurch gekennzeichnet, daß als Wirkstoff aus der Klasse der Phosphorsäureester O,O-Dimethyl-O-(3-methyl-4-methylthio-phenyl)-thiophosphat enthalten ist.

3. Makroemulsionen gemäß Anspruch 1, dadurch gekennzeichnet, daß als Wirkstoff aus der Klasse der Phosphorsäureester O-Ethyl-(3-methyl-4-methyl-thio-phenyl)isopropylamido-phosphat enthalten ist.

4. Makroemulsionen gemäß Anspruch 1, dadurch gekennzeichnet, daß als Wirkstoff aus der Klasse der Phosphorsäureester O-Ethyl-O-(2,4-dichlorphenyl)-S-n-propyl-dithio-phosphat enthalten ist.

5. Makroemulsionen gemäß Anspruch 1, dadurch gekennzeichnet, daß als aromatische Verdünnungsmittel Toluol, Ethylbenzol, Chlorbenzol, Xylole, alkylierte Benzole mit durchschnittlich 9 Kohlenstoffatomen und/oder gegebenenfalls durch Alkyl mit 1 bis 3 Kohlenstoffatomen substituiertes Naphthalin enthalten sind.

6. Makroemulsionen gemäß Anspruch 1, gekennzeichnet durch einen Gehalt von 0,01 bis 10 Gewichtsprozent an Nonylphenol-Propyxlenoxid-Ethylenoxid-Addukt der Formel (I), in welcher
X für ganze Zahlen von 20 bis 45 und
Y für ganze Zahlen von 20 bis 60 steht,
und/oder
0,01 bis 10 Gewichtsprozent an Ethylenoxid-Propylenoxid-Ethylenoxid-Blockcopolymeren mit einem mittleren Molekulargewicht zwischen 2500 und 7000 und HLB-Werten zwischen 9 und 27.
7. Makroemulsionen gemäß Anspruch 1, dadurch gekennzeichnet, daß die Ölphase in Form von Tröpfchen mit einem mittleren Teilchendurchmesser zwischen 0,2 μ und 2,5 μ in der wäßrigen Phase verteilt ist.
8. Verfahren zur Herstellung von Makroemulsionen, dadurch gekennzeichnet, daß man
– mindestens einen Wirkstoff aus der Klasse der Phosphorsäureester, gegebenenfalls in Gegenwart eines aromatischen Verdünnungsmittels bei Temperaturen zwischen 10°C und 30°C unter Rühren.
– mit einer wäßrigen Lösung, die zwischen 1 und 30 Gewichtsprozent an Nonylphenol-Propylenoxid-Ethylenoxid-Addukt der Formel

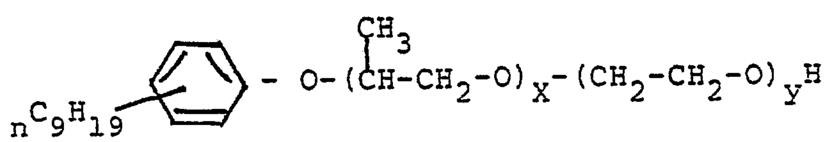
(I)

in welcher
X für ganze Zahlen von 10 bis 50 steht und
Y für ganze Zahlen von 15 bis 65 steht,
enthält,
und/oder
– mit einer wäßrigen Lösung, die zwischen 1 und 30 Gewichtsprozent an Ethylenoxid-Propylenoxid-Ethylenoxid-Blockcopolymeren mit einem mittleren Molekulargewicht zwischen 2000 und 8000 und HLB-Werten zwischen 8 und 30 enthält, versetzt,
– dann die resultierende Emulsion, gegebenenfalls nach vorherigem Versetzen mit Zusatzstoffen, bei Temperaturen zwischen 10°C und 70°C mit einer geeigneten Vorrichtung homogenisiert und
– anschließend mit Glycerin versetzt und mit Wasser auf die gewünschte Konzentration auffüllt.

## Claims

1. Macroemulsions, characterised in that they contain
– 0.001 to 60 per cent by weight of at least one active compound from the class comprising the phosphoric acid esters,
– 0 to 50 per cent by weight of aromatic diluent,
– 0.001 to 20 per cent by weight of a nonylphenol/propylene oxide/ethylene oxide adduct of the formula

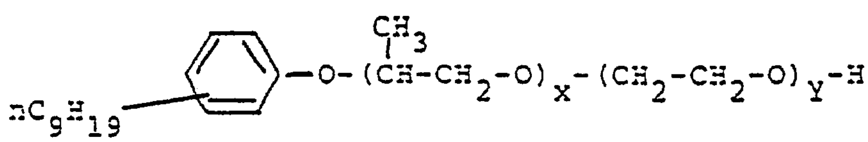
(I)

in which
X represents integers from 10 to 50 and
Y represents integers from 15 to 65,
and/or
– 0.001 to 20 per cent by weight of ethylene oxide/propylene oxide/ethylene oxide block copolymers having a mean molecular weight of between 2000 and 8000 and HLB values of between 8 and 30,
– and water and glycerol and
– in which the oil phase is dispersed in the aqueous phase in the form of droplets having a mean particle diameter of 0.1 to 3.0 μ.
2. Macroemulsions according to Claim 1, characterised in that O,O-dimethyl O-(3-methyl-4-methylthiophenyl) thiophosphate is present as the active compound from the class comprising the phosphoric acid esters.
3. Macroemulsions according to Claim 1, characterised in that O-ethyl-(3-methyl-4-methyl-thio-phenyl) isopropyl-amido-phosphate is present as the active compound from the class comprising the phosphoric acid esters.
4. Macroemulsions according to Claim 1, characterised in that O-ethyl O-(2,4-dichlorophenyl) S-n-propyl dithio-phosphate is present as the active compound of the class comprising the phosphoric acid esters.

5. Macroemulsions according to Claim 1, characterised in that toluene, ethylbenzene, chlorobenzene, xylenes, alkylated benzenes having on average 9 carbon atoms and/or naphthalene which is optionally substituted by alkyl having 1 to 3 carbon atoms are present as aromatic diluents.

6. Macroemulsions according to Claim 1, characterised in that they contain 0.01 to 10 per cent by weight of a nonylphenol/propylene oxide/ethylene oxide adduct of the formula (I)

in which

X represents integers from 20 to 45 and

Y represents integers from 20 to 60,

and/or

0,01 to 10 per cent by weight of ethylene oxide/propylene oxide/ethylene oxide block copolymers having a mean molecular weight of between 2500 and 7000 and HLB values of between 9 and 27.

7. Macroemulsions according to Claim 1, characterised in that the oil phase is dispersed in the aqueous phase in the form of droplets having a mean particle diameter of between 0.2 µ and 2.5 µ.

8. Process for the preparation of macroemulsions, characterised in that

– an aqueous solution which contains between 1 and 30 per cent by weight of a nonylphenol/propylene oxide/ethylene oxide adduct of formula

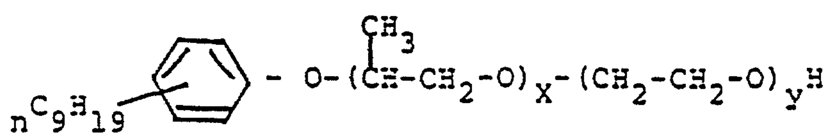 (I)

in which

X represents integers from 10 to 50 and

Y represents integers from 15 to 65,

and/or

– an aqueous solution which contains between 1 and 30 per cent by weight of ethylene oxide/propylene oxide/ethylene oxide block copolymers having a mean molecular weight of between 2000 and 8000 and HLB values of between 8 and 30

are added to

– at least one active compound from the class comprising the phosphoric acid esters, if appropriate in the presence of an aromatic diluent at temperatures between 10°C and 30°C, while stirring,

– the resulting emulsion, if appropriate after additives have been introduced beforehand, is then homogenised at temperatures between 10°C and 70°C using a suitable apparatus, and

– glycerol is then introduced and the emulsion is made up with water to the desired concentration.

## Revendications

1. Macro-émulsions caractérisées en ce qu'elles contiennent

– 0,001 à 60% en poids d'au moins une substance active de la classe des esters de l'acide phosphorique,

– 0 à 50% en poids de diluants aromatiques,

– 0,001 à 20% en poids d'un produit d'addition de l'oxyde de propylène et de l'oxyde d'éthylène sur du nonylphénol, produit répondant à la formule

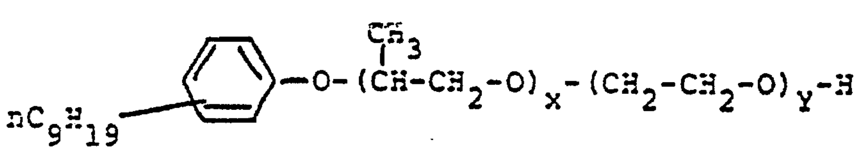 (I)

dans laquelle

X représente des nombres entiers valant 10 à 50, et

Y représente des nombres entiers valant 15 à 65,

et/ou

– 0,001 à 20% en poids de copolymères à longues séquences oxyde d'éthylène/d'oxyde de propylène/d'oxyde d'éthylène, ayant un poids moléculaire moyen compris entre 2000 et 8000 et présentant des valeurs de l'indice d'équilibre (ou balance) hydrophile-lipophile comprises entre 8 et 30,

ainsi que de l'eau et du glycérol, et

dans lesquelles la phase huileuse est répartie sous forme de gouttelettes ayant un diamètre particulaire moyen de 0,1 à 3,0 µm dans la phase aqueuse.

2. Macro-émulsions selon la revendication 1, caractérisées en ce qu'elles contiennent comme substance active de la classe des esters de l'acide phosphorique du thiophosphate d'O,O-diméthyle et d'O-(3-méthyl-4-méthylthiophényle).

3. Macro-émulsions selon la revendication 1, caractérisées en ce qu'elles contiennent comme substance active de la classe des esters de l'acide phosphorique de l'isopropylamidophosphate d'O-éthyle et d'O-(3-méthyl-4-méthylthiophényle).

4. Macro-émulsions selon la revendication 1, caractérisées en ce qu'elles contiennent comme substance active de la classe des esters de l'acide phosphorique du S-n-propyl-dithiophosphate d'O-éthyle et d'O-(2,4-dichlorophényle).

5. Macro-émulsions selon la revendication 1, caractérisées en ce qu'elles contiennent comme diluants aromatiques du toluène, de l'éthylbenzène, du chlorobenzène, des xylènes, des benzènes alkylés comportant en moyenne 9 atomes de carbone et/ou du naphthalène éventuellement substitué par un groupe alkyle contenant 1 à 3 atomes de carbone.

6. Macro-émulsions selon la revendication 1, caractérisées en ce qu'elles contiennent de 0,01 à 10% en poids d'un produit d'addition de l'oxyde de propylène et de l'oxyde d'éthylène sur du nonylphénol, produit répondant à la formule (I), dans laquelle

X représente des nombres entiers valant 20 à 45, et

Y représente des nombres entiers valant 20 à 60,

et/ou

– 0,01 à 10% en poids de copolymères à longues séquences oxyde d'éthylène/oxyde de propylène/oxyde d'éthylène, ayant un poids moléculaire moyen compris entre 2500 et 7000 et présentant des valeurs de l'équilibre hydrophile-lipophile comprises entre 9 et 27.

7. Macro-émulsions selon la revendication 1, caractérisées en ce que la phase huileuse est répartie, sous forme de gouttelettes ayant un diamètre particulaire moyen compris entre 0,2 µm et 2,5 µm, dans la phase aqueuse.

8. Procédé de préparation de macro-émulsions, caractérisé en ce qu'on ajoute

– à au moins une substance active de la classe des esters de l'acide phosphorique, éventuellement en présence d'un diluant aromatique, à des températures comprises entre 10°C et 30°C, sous agitation,

– une solution aqueuse contenant entre 1 et 30% en poids d'un produit d'addition de l'oxyde de propylène et de l'oxyde d'éthylène sur du nonylphénol, produit répondant à la formule

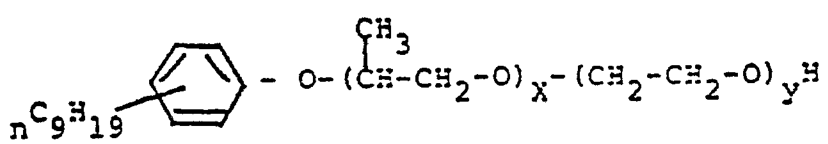

(I)

dans laquelle

X représente des nombres entiers valant 10 à 50, et

Y représente des nombres entiers valant 15 à 65,

et/ou

– une solution aqueuse contenant entre 1 et 30% en poids de copolymère(s) à longues séquences oxyde d'éthylène/oxyde de propylène/oxyde d'éthylène ayant un poids moléculaire moyen compris entre 2000 et 8000 et présentant des valeurs de l'indice d'équilibre hydrophile-lipophile comprises entre 8 et 30,

– puis l'on homogénéisé, à l'aide d'appareillage convenable, l'émulsion résultante, éventuellement après lui avoir ajouté des additifs, en opérant à des températures comprises entre 10°C et 70°C, et

– puis on ajoute du glycérol et l'on complète avec de l'eau jusqu'à la concentration voulue.